**Europäisches Patentamt**

**European Patent Office**

**Office européen des brevets**

(19)

(11) Numéro de publication : **0 501 888 B1**

# (12) FASCICULE DE BREVET EUROPEEN

(45) Date de publication du fascicule du brevet :
**28.06.95 Bulletin 95/26**

(51) Int. Cl.$^6$ : **G07F 7/08**

(21) Numéro de dépôt : **92400509.3**

(22) Date de dépôt : **27.02.92**

(54) **Procédé et installation de contrôle d'accès d'un utilisateur à un système informatique en un point d'accès parmi plusieurs possibles.**

(30) Priorité : **01.03.91 FR 9102484**

(43) Date de publication de la demande :
**02.09.92 Bulletin 92/36**

(45) Mention de la délivrance du brevet :
**28.06.95 Bulletin 95/26**

(84) Etats contractants désignés :
**AT BE CH DE DK ES GB GR IT LI LU NL PT SE**

(56) Documents cités :
**EP-A- 0 127 424**
**EP-A- 0 200 343**
**EP-A- 0 349 413**
**DE-A- 2 929 603**

(73) Titulaire : **CENTRE D'ECHANGES DE DONNEES ET D'INFORMATIONS DU CREDIT AGRICOLE MUTUEL CEDICAM**
**16 rue Lecourbe**
**F-75015 Paris (FR)**

(72) Inventeur : **Perchet, Jean-Claude**
**41, rue du Pr. Calmette**
**F-92190 Meudon (FR)**
Inventeur : **El Laban, Youssef Camille**
**17 bis, rue Lacroix**
**F-75017 Paris (FR)**

(74) Mandataire : **Gorree, Jean-Michel et al**
**84, rue d'Amsterdam**
**F-75009 Paris (FR)**

## Description

La présente invention concerne un procédé et une installation de contrôle d'accès d'un utilisateur à un système informatique en un point d'accès parmi une pluralité de points d'accès possibles.

On suppose avoir à contrôler, pour plusieurs dizaines de millions d'utilisateurs, l'accès d'utilisateurs à des services à travers un réseau de terminaux installés en des points d'accès (système bancaire par exemple). Chaque utilisateur est reconnu par un code ou identifiant, personnel et unique, composé de $n$ caractères alphanumériques : $I_1 I_2 I_3...I_n$.

Pour des raisons de sécurité, il arrive que des utilisateurs perdent leur droit d'accès aux services. Cette perte de droit est enregistrée par un centre de sécurité qui transmet cette information à un centre de gestion, à charge pour ce dernier de la diffuser aux points d'accès le plus rapidement possible afin d'empêcher les identifiants interdits d'accéder aux services.

Etant donné le nombre important des utilisateurs, il arrive que plusieurs centaines de milliers d'entre eux soient interdits d'accès au même moment. La diffusion de la liste exhaustive des identifiants interdits à tous les points d'accès est coûteuse et pénalisante du point de vue des performances du système.

La pratique la plus courante est la diffusion d'un extrait de la liste exhaustive des identifiants interdits comprenant les identifiants dont l'accès représente le plus grand risque pour le système. Il existe également des solutions consistant en ce que le point d'accès appelle le centre de sécurité selon des critères de risques prédéfinis pour demander une autorisation préalable d'accès pour un utilisateur.

Si l'efficacité de la première solution actuellement utilisée est limitée par la capacité de stockage des terminaux de points d'accès, celle de la deuxième solution revient chère en coût de fonctionnement et de dimensionnement des centres et des réseaux d'information; elle est également pénalisante en terme de temps de réponse.

L'invention a essentiellement pour but de remédier aux inconvénients présentés par les processus antérieurs et de permettre, pour une même capacité de mémorisation des terminaux de points d'accès, un accroissement du nombre des identifiants interdits tenus en mémoire en chaque point d'accès sans augmentation dans la même proportion du nombre des appels au centre de sécurité.

A cette fin, selon un premier aspect de l'invention, il est proposé un procédé qui se caractérisé essentiellement par les étapes qui suivent :

A - Au cours d'une phase de préparation préalable :
- on détecte des identifiants qui sont interdits d'accès au système, chaque identifiant étant constitué d'un ensemble de $n$ signes,
- à l'aide de k algorithmes, on calcule, pour chaque identifiant interdit, k sous-identifiants interdits qui sont constitués d'un même nombre de signes inférieur à celui des identifiants ;
- on établit k listes regroupant les sous-identifiants interdits de mêmes rangs obtenus respectivement avec les k algorithmes ;
- on attribue à chaque liste un nombre risque calculé en fonction de la fréquence théorique d'apparition des sous-identifiants dans la population d'identifiants et on associe à chaque nombre risque un complément ;
- on calcule le risque général pour une demande d'accès;
- on transmet les k listes, les nombres-risques calculés et leurs compléments, ainsi que les algorithmes de calcul des sous-identifiants interdits à tous les points d'accès où ces informations sont mémorisées ;

B - Puis au moment d'une demande d'accès d'un utilisateur représenté par un identifiant, faite à un point d'accès donné, on effectue audit point d'accès les opérations qui suivent :
- on calcule, à l'aide des k algorithmes, les sous-identifiants correspondants à l'identifiant de l'utilisateur demandeur d'accès ;
- on teste la présence de ces sous-identifiants dans les listes correspondantes préétablies et tenues en mémoire des sous-identifiants interdits ;
- si le sous-identifiant existe dans la liste des sous-identifiants interdits de même rang, on lui affecte un risque égal au risque attribué à cette liste ;
- si le sous-identifiant n'existe pas dans la liste des sous-identifiants interdits de même rang, on lui affecte un risque égal au complément du risque attribué à cette liste ;
- on calcule le risque total de l'accès en effectuant une opération prédéterminée sur les risques individuels ;
si le risque total est supérieur ou égal au risque général, on demande à un centre une autorisation de donner l'accès au demandeur ; si le risque total est inférieur au risque général, on accorde directement l'accès.

Selon un second aspect de l'invention, il est proposé une installation qui se caractérisé essentiellement en ce qu'elle comporte :

A - Dans une partie centralisée du système :

- des moyens de détection des identifiants qui sont interdits d'accès au système, chaque identifiant étant constitué d'un ensemble de $n$ signes,
- des moyens de calcul propres, à l'aide de k algorithmes, à calculer, pour chaque identifiant interdit, k sous-identifiants interdits qui sont constitués d'un même nombre de signes inférieur à celui des identifiants ;
- des moyens de classement propres à établir k listes regroupant les sous-identifiants interdits de mêmes rangs obtenus respectivement avec les k algorithmes ;
- des moyens de détermination de risque propres à attribuer à chaque liste un nombre risque calculé en fonction de la fréquence théorique d'apparition des sous-identifiants dans la population d'identifiants et à associer à chaque nombre risque un complément ;
- des moyens de transmissions propres à calculer le risque général pour une demande d'accès ;
- des moyens de transmission propres à transmettre les k listes, les nombres-risques calculés et leurs compléments, ainsi que les algorithmes de calcul des sous-identifiants interdits à tous les points d'accès où ces informations sont mémorisées ;

B - A chaque point d'accès :

- des moyens de calcul propres à calculer, à l'aide des k algorithmes, les sous-identifiants correspondants à l'identifiant de l'utilisateur demandeur d'accès ;
- des moyens de recherche propres à tester la présence de ces sous-identifiants dans les listes corresponantes préétablies et tenues en mémoire des sous-identifiants interdits ;
- des moyens d'attribution d'un nombre risque à chaque sous-identifiant propre

si le sous-identifiant existe dans la liste des sous-identifiants interdits de même rang, à lui affecter un risque égal au risque attribué à cette liste, ou

si le sous-identifiant n'existe pas dans la liste des sous-identifiants interdits de même rang, à lui affecter un risque égal au complément du risque attribué à cette liste ;

- des moyen de calcul propres à calculer le risque total de l'accès par une opération prédéterminée sur les risques individuels ;
- des moyens de sélection propres, si le risque total est supérieur ou égal au risque général, à demander à un centre une autorisation de donner l'accès au demandeur ou, si le risque total est inférieur au risque général, à accorder directement l'accès.

L'invention sera mieux comprise à la lecture de la description détaillée qui suit d'un exemple donné à titre purement illustratif ; dans cette description, on se réfère aux dessins annexés sur lesquels :

- la figure 1 est un schéma très simplifié illustrant le type de système d'échange d'informations visé par l'invention ;
- la figure 2 est un schéma synoptique illustrant un exemple de structure d'un terminal de point d'accès utilisable dans le système de la figure 1 ;
- la figure 3 est un organigramme illustrant une première partie du déroulement du procédé conforme à l'invention ; et
- la figure 4 est un organigramme illustrant une seconde partie du déroulement du procédé conforme à l'invention.

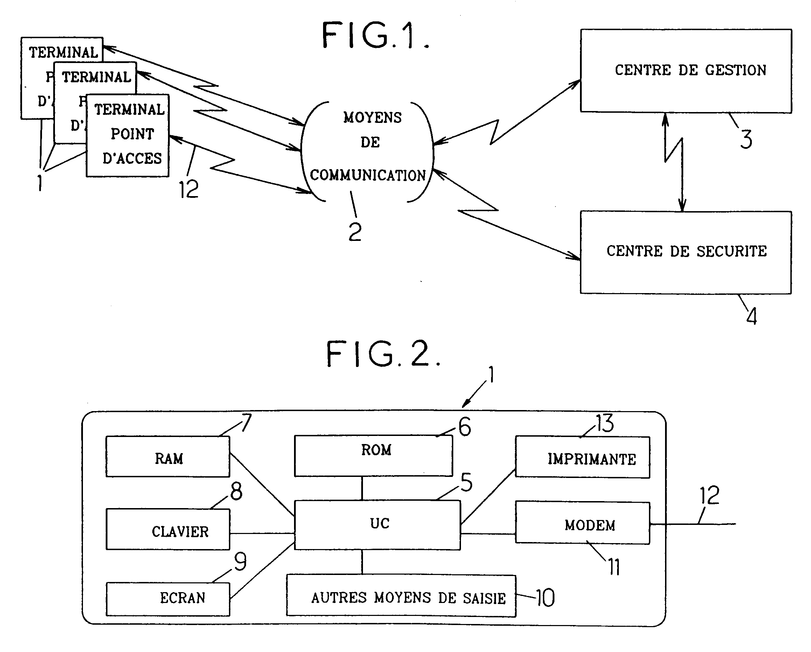

On précise tout d'abord que l'invention vise l'amélioration du fonctionnement d'un système d'échange d'informations (par exemple dans le domaine bancaire) qui, comme représenté très schématiquement à la figure 1, comprend une pluralité de terminaux de points d'accès 1 reliés, par des moyens de communication 2 (par exemple lignes téléphoniques ou analogues), à un centre de gestion 3 et à un centre de sécurité 4, lesquels sont en outre reliés directement entre eux.

Par centre de sécurité, on entend un centre informatique qui détecte et détermine les interdictions d'accès de certains utilisateurs aux services offerts à travers le réseau de terminaux de points d'accès.

Par centre de gestion, on entend un centre informatique qui est responsable de l'information et de la marche quotidienne du réseau des terminaux de point d'accès.

Enfin, par terminal de point d'accès, on entend un matériel comportant plusieurs dispositifs de contrôle d'accès et de mémorisation des services offerts. Pour fixer les idées, on a représenté à la figure 2 un schéma synoptique d'un exemple de terminal de point d'accès 1. Un tel terminal est structuré autour d'un processeur (microprocesseur) central ou unité centrale (UC) 5 qui assure la gestion du terminal. A cette unité centrale 5 sont raccordées :

- une mémoire non-volatile ROM 6 (EEPROM, EPROM) contenant les programmes de démarrage ;
- une mémoire de travail 7 (RAM) contenant les programmes de travail ;

3

- une unité de saisie d'informations à clavier 8 (touches numériques, alphanumériques et de fonctions programmables) ;
- une unité de visualisation 9 (tube cathodique, écran LCD) ;
- éventuellement d'autres unités de saisie 10, notamment des dispositifs d'identification du demandeur (lecteur de cartes à piste magnétique, de carte à mémoire, de codes barres, etc.) ;
- une unité de communication telle qu'un MODEM 11 relié à une ligne de transmission 12 ;
- une unité 13 de fourniture de documents (par exemple ticket papier, enregistrement magnétique ou électrique, etc.), équipée à cet effet d'appareils d'impression (imprimante à aiguilles, en codeur magnétique, etc.).

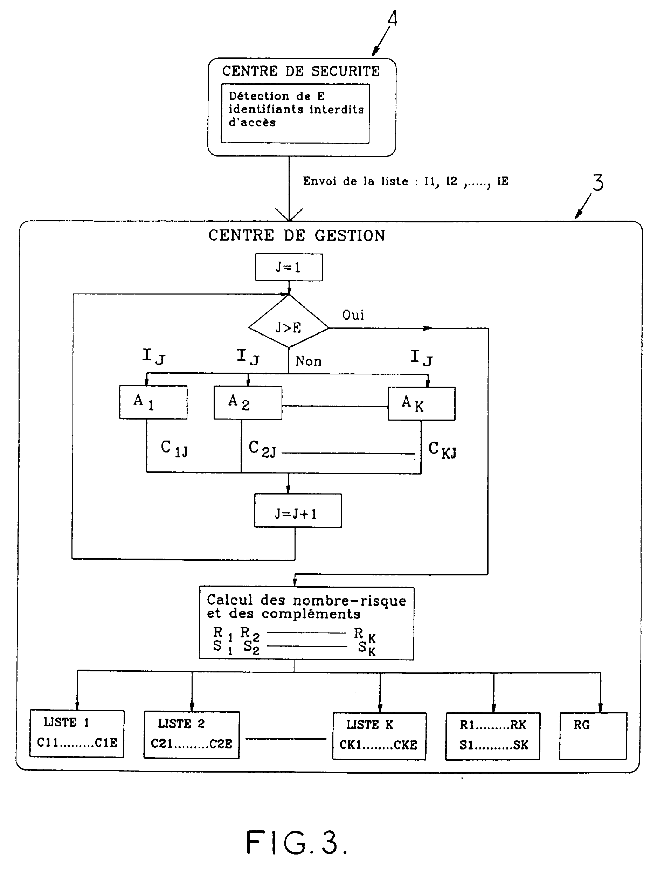

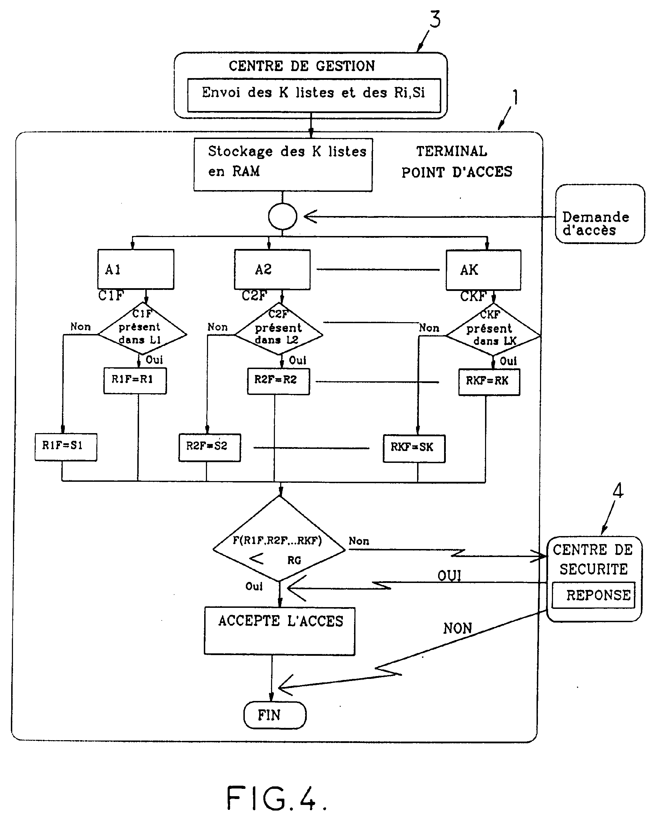

Le procédé conforme à l'invention, qui va maintenant être décrit en se référant aux figures 3 et 4, permet de multiplier, pour une même capacité des mémoires de travail RAM des terminaux de point de l'accès, le nombre des identifiants interdits tenus en mémoire sans qu'il soit nécessaire d'augmenter dans la même proportion le nombre des appels au centre de sécurité.

Sur les figures 3 et 4, on a repris les mêmes références numériques pour désigner les éléments identiques à ceux des figures 1 et 2.

Au cours d'une phase de préparation préalable qui est schématisée à la figure 3, on procède à la suite des étapes suivantes qui regroupent les fonctions de détection et de diffusion des informations relatives aux identifiants interdits :

1. Des moyens de détection du centre de sécurité détectent un ou plusieurs (en nombre E) identifiants qui sont interdits d'accès au système. Chaque identifiant $I_j$ ($1 \leqq j \leqq E$) est constitué par un ensemble de $\underline{n}$ symboles (par exemple numériques et/ou alphanumériques)

$$I_j = I_{1j} I_{2j} .... I_{nj}.$$

2. Le centre de sécurité 4 transmet ensuite au centre de gestion 3 la liste des E identifiants interdits $I_1$, $I_2$,..., $I_E$.

3. A l'aide de $\underline{k}$ algorithmes $A_1, A_2,..., A_k$, des moyens de calcul du centre de gestion calculent, pour chaque identifiant $I_j$ reçu, k sous-identifiants interdits constitués par un ensemble de $\underline{s}$ symboles, par exemple, numériques et/ou alphanumériques, dans une base B :

$$C_{1J}, C_{2J}, C_{3J},..., C_{kj}$$

Les sous-identifiants sont tous de même longueur $\underline{s}$ (s<n) et ils ont donc des valeurs comprises entre 0 et ($B^s$-1).

4. Des moyens de classements du centre de gestion effectuent également une classification des sous-identifiants interdits $C_{ij}$ et établissent k listes de sous-identifiants $C_{ij}$ interdits correspondants (c'est-à-dire ayant même indice i). La liste 1 contient tous les sous-identifiants interdits $C_{1j}$ (j = 1 à E) ; la liste 2 contient tous les sous-identifiants $C_{2j}$ (j = 1 à E) ; etc.

5. A chaque liste i (i = 1 à k), des moyens de détermination de risque du centre de gestion attribuent un nombre risque $R_i$ calculé en fonction de la fréquence théorique d'apparition des sous-identifiants dans la population d'identifiants (résultat d'une vérification positive de la présence d'un sous-identifiant dans une liste) ; ils associent également, à chaque nombre risque $R_i$, un complément $S_i$ (résultat d'une vérification négative).

6. Des moyens de transmission du centre de gestion calculent ensuite le risque général $R_g$ pour une demande d'accès.

7. Enfin des moyens de transmission du centre de gestion transmettent, à tous les points d'accès, l'ensemble des informations qu'il a calculé, savoir les k listes de sous-identifiants interdits, le nombre risque $R_i$ et leurs compléments $S_i$, le nombre risque général $R_g$, ainsi que les algorithme de-calcul des sous-identifiants interdits $c_{ij}$.

8. Chaque terminal de point d'accès reçoit ces informations et les stocke dans sa mémoire de travail RAM.

Lorsqu'un utilisateur se présente à un point d'accès, une phase d'autorisation d'accès se déroule comme représenté à la figure 4.

9. L'utilisateur fournit au terminal du point d'accès son code ou identifiant $I_d$ et des moyens de calcul du terminal calculent, à l'aide des k algorithmes qui lui ont été communiqués, les k sous-identifiants $C_{id}$ correspondants.

10. Des moyens de recherche appartenant au terminal testent la présence des sous-identifiants $C_{id}$ dans les k listes de sous-identifiants interdits qui lui ont été communiquées :

- si le sous-identifiant $C_{id}$ existe dans la liste i, des moyens d'attribution de nombre risque donnent à son risque $R_{di}$ une valeur égale à $R_i$,
- si le sous-identifiant $C_{id}$ n'existe pas dans la liste i, les moyens d'attribution de nombre risque donnent à son risque $R_{di}$ une valeur égale à $S_i$.

11. Une fois les tests terminés et établies les valeurs respectives des risques $R_{di}$, des moyens de calcul du terminal calculent le risque total d'accès en effectuant une opération prédéterminée sur tous les risques individuels $Rd_i$ (par exemple : produit des risques $R_{di}$).

12. Si le risque total dépasse la valeur $R_g$, des moyens de sélection du terminal provoquent l'appel du centre de sécurité pour demander une autorisation. Si le risque total est inférieur à la valeur $R_g$, les moyens de sélection du terminal provoquent l'acceptation de l'accès et l'utilisateur est autorisé à poursuivre ses opérations.

Chaque terminal de point d'accès reçoit périodiquement du centre de gestion des additions d'identifiants interdits. Rajoutés aux listes existantes, ces identifiants génèrent des appels supplémentaires destinés à lever le doute. Chaque terminal signale au centre de gestion, lors des mises à jour, le taux des accès ayant fait l'objet d'un appel. Le centre de gestion décide, au vu de ce taux, d'envoyer de nouvelles listes ou de continuer l'envoi des additions.

Pour fixer les idées, on va maintenir décrire un exemple concret simple du procédé conforme à l'invention qui vient d'être exposé dans son aspect général.

Le centre de sécurité détecte quatre identifiants à interdire, chacun étant constitué d'un nombre de neuf chiffres :

$I_1 = 453322552$
$I_2 = 522931334$
$I_3 = 922721916$
$I_4 = 225556788$

Le centre de sécurité envoie la liste de ces identifiants interdits au centre de gestion.

Le centre de gestion calcule, pour chaque identifiant interdit, trois sous-identifiants interdits $C_{ij}$ à l'aide de trois algorithmes $A_1$, $A_2$, $A_3$. Chaque algorithme $A_i$ (i = 1, 2, 3) consiste à associer à chaque identifiant $I_j = I_{1j}, I_{2j},...,I_{9j}$, trois sous-identifiants $C_{ij}$ constitués chacun de trois chiffres prélevés à la suite dans l'identifiant de la manière suivante :

$C_{1j} = A_1(I_j) = I_{1j}I_{2j}I_{3j}$
$C_{2j} = A_2(I_j) = I_{4j}I_{5j}I_{6j}$
$C_{3j} = A_3(I_j) = I_{7j}I_{8j}I_{9j}$

De façon simple, la valeur du risque théorique $R_i$ est prise égale à 1, et donc celle de son complément $S_i$ égale à 0. Le risque général $R_g$ est choisi égal au produit des risques $R_i$ et donc $R_g = 1$.

Ainsi le centre de gestion dispose de trois listes :

```
-----------------------------------------------------
:     LISTE 1      :     LISTE 2     :     LISTE 3     :
:-----------------:----------------:-----------------:
:                 :                :                 :
: C   = 453       : C    = 322     : C    = 552      :
:  11             :   12           :   13            :
: C   = 522       : C    = 931     : C    = 334      :
:  21             :   22           :   23            :
: C   = 922       : C    = 721     : C    = 916      :
:  31             :   32           :   33            :
: C   = 225       : C    = 556     : C    = 788      :
:  41             :   42           :   43            :
:-----------------:----------------:-----------------:
: R  = 1          : R  = 1         : R  = 1          :
:  1              :  2             :  3              :
: S  = 0          : S  = 0         : S  = 0          :  R  = 1
:  1              :  2             :  3              :   G
-----------------------------------------------------

R   = 1
 G
```

Ces listes sont envoyées à tous les terminaux de points d'accès.

Lorsqu'un utilisateur désire accéder au système, il fournit au terminal son identifiant $I_d$, par exemple :

$I_d = 453931216$

Le terminal du point d'accès calcule alors les sous-identifiants $C_{di}$ correspondant à cet identifiant

$C_{d1} = 453$     $C_{d2} = 931$     $C_{d3} = 216$

puis les risques $R_{di}$ affectés à chacun d'eux :

$C_{d1}$ existe dans la LISTE 1 : donc $R_{d1} = R_1 = 1$

$C_{d2}$ existe dans la LISTE 2 : donc $R_{d2} = R_2 = 1$

$C_{d3}$ n'existe pas dans la LISTE 3 : donc $R_{d3} = S_3 = 0$

Le produit ($R_{d1} \times R_{d2} \times R_{d3}$) est égal à 0, donc inférieur à $R_G$. L'accès est accepté.

Si par contre l'utilisateur avait eu pour code : $I_d = 453931788$ (lequel n'est pas un identifiant interdit) le troisième sous-identifiant $C_{d3}$ serait égal à 788 qui figure dans la liste 3 ; le risque correspondant étant égal à 1, le produit $R_{d1} \times R_{d2} \times R_{d3}$ serait lui aussi égal à 1, donc égal au risque général $R_g = 1$. Le terminal serait alors obligé de demander une autorisation au centre de sécurité avant de permettre l'accès.

Comme il va de soi et comme il résulte d'ailleurs déjà de ce qui précède, l'invention ne se limite nullement à ceux de ses modes d'application et de réalisation qui ont été plus particulièrement envisagés ; elle en embrasse, au contraire, toutes les variantes, telles que définies par les revendications.


**Revendications**

1. Procédé de contrôle d'accès d'un utilisateur, représenté par un code ou identifiant, à un système informatique à partir d'un point d'accès (1) choisi parmi une pluralité de points d'accès possibles, caractérisé en ce qu'il comporte les étapes qui suivent :
   A - au cours d'une phase de préparation préalable :
   - on détecte des identifiants qui sont interdits d'accès au système, chaque identifiant étant constitué d'un ensemble de n signes,
   - à l'aide de k algorithmes, on calcule, pour chaque identifiant interdit, k sous-identifiants interdits qui sont constitués d'un même nombre de signes inférieur à celui des identifiants ;
   - on établit k listes regroupant les sous-identifiants interdits de mêmes rangs obtenus respectivement avec les k algorithmes ;
   - on attribue à chaque liste un nombre risque calculé en fonction de la fréquence théorique d'apparition des sous-identifiants dans la population d'identifiants et on associe à chaque nombre risque un complément ;
   - on calcule le risque général pour une demande d'accès;
   - on transmet les k listes, les nombres-risques calculés et leurs compléments, ainsi que les algorithmes de calcul des sous-identifiants interdits à tous les points d'accès (1) où ces informations sont mémorisées ;
   B - puis, au moment d'une demande d'accès d'un utilisateur représente par un identifiant, faite à un point d'accès donne, en ce point d'accès :
   - on calcule, à l'aide des k algorithmes, les sous-identifiants correspondants à l'identifiant de l'utilisateur demandeur d'accès ;
   - on teste la présence de ces sous-identifiants dans les listes correspondantes préétablies et tenues en mémoire des sous-identifiants interdits ;
   - si le sous-identifiant existe dans la liste des sous-identifiants interdits de même rang, on lui affecte un risque égal au risque attribué à cette liste ;
   - si le sous-identifiant n'existe pas dans la liste des sous-identifiants interdits de même rang, on lui affecte un risque égal au complément du risque attribué à cette liste ;
   - on calcule le risque total de l'accès par une opération prédéterminée sur les risques individuels ;
   - si le risque total est supérieur ou égal au risque général, on demande à un centre une autorisation de donner l'accès au demandeur ; si le risque total est inférieur au risque général, on accorde directement l'accès.

2. Procédé selon la revendication 1, caractérisé en ce que les sous-identifiants sont constitués de groupes de signes extraits de l'identifiant auquel ils sont associés.

3. Installation de contrôle d'accès d'un utilisateur, représenté par un code ou identifiant, à un système informatique à partir d'un point d'accès (1) choisi parmi une pluralité de points d'accès possibles, caractérisé en ce qu'elle comporte :
   A - dans une partie centralisée du système:
   - des moyens de détection des identifiants qui sont interdits d'accès au système, chaque identifiant étant constitué d'un ensemble de n signes,
   - des moyens de calcul propres, à l'aide de k algorithmes, à calculer, pour chaque identifiant interdit, k sous-identifiants interdits qui sont constitues d'un même nombre de signes inférieur à celui des identifiants ;
   - des moyens de classement propres à établir k listes regroupant les sous-identifiants interdits de mêmes rangs obtenus respectivement avec les k algorithmes ;
   - des moyens de détermination de risque propres à attribuer à chaque liste un nombre risque calculé en fonction de la fréquence théorique d'apparition des sous-identifiants dans la population d'identifiants et à associer à chaque nombre risque un complément ;

- des moyens de transmissions propres à calculer le risque géneral pour une demande d'accès ;
- des moyens de transmission propres à transmettre les k listes, les nombres-risques calcules et leurs compléments, ainsi que les algorithmes de calcul des sous-identifiants interdits à tous les points d'accès (1) où ces informations sont mémorisées ;

B - à chaque point d'accès:
- des moyens de calcul propres à calculer, à l'aide des k algorithmes, les sous-identifiants correspondants à l'identifiant de l'utilisateur demandeur d'accès ;
- des moyens de recherche propres à tester la présence de ces sous-identifiants dans les listes correspondantes préétablies et tenues en mémoire des sous-identifiants interdits ;
- des moyens d'attribution d'un nombre risque à chaque sous-identifiant propre :
  si le sous-identifiant existe dans la liste des sous-identifiants interdits de même rang, à lui affecter un risque égal au risque attribué à cette liste ;
  si le sous-identifiant n 'existe pas dans la liste des sous-identifiants interdits de même rang, à lui affecter un risque égal au complément du risque attribué à cette liste ;
- des moyen de calcul propres à calculer le risque total de l'accès par une opération prédéterminée sur les risques individuels ;
- des moyens de sélection propres, si le risque total est supérieur ou égal au risque général, à demander à un centre une autorisation de donner l'accès au demandeur ou ; si le risque total est inférieur au risque général, à accorder directement l'accès.

4. Installation selon la revendication 3, caractérisée en ce que les moyens de détection des identifiants interdits sont situés dans un centre de sécurité (4) du système.

5. Installation selon la revendication 3 ou 4, caractérisée en ce que les moyens de calcul des sous-identifiants, de classement, d'établissement des nombres risque, de calcul du risque géneral et de transmission sont situes dans un centre de gestion (3) du système qui est en liaison avec le centre de sécurité (4) et les points d'accès (1).

## Patentansprüche

1. Verfahren zur Kontrolle eines Zugriffs eines Benutzers, der durch einen Code oder Identifikanden dargestellt ist, auf ein Datenverarbeitungssystem von einem Zugriffspunkt (1) aus, der aus einer Mehrzahl möglicher Zugriffspunkte ausgewählt ist, dadurch gekennzeichnet, daß es die folgenden Schritte umfaßt:

A - im Verlauf einer vorangehenden Vorbereitungsphase:
- man erfaßt Identifikanden, deren Zugriff auf das System verboten ist, wobei jeder Identikand von einer Gesamtheit von n Zeichen gebildet ist;
- man berechnet mit Hilfe von k Algorithmen für jeden verbotenen Identifikanden k verbotene Unter-Identifikanden, die von einer gleichen Anzahl von Zeichen gebildet sind, welche kleiner ist als jene der Identifikanden;
- man erstellt k Listen, welche die verbotenen Unter-Identifikanden gleichen Rangs zusammenfassen, welche jeweils mit den k Algorithmen erhalten wurden;
- man weist jeder Liste eine Risikozahl zu, die als Funktion der theoretischen Auftrittshäufigkeit der Unter-Identifikanden in der Population der Identifikanden berechnet wird, und man ordnet jeder Risikozahl ein Komplement zu;
- man berechnet das allgemeine Risiko für eine Zugriffsanforderung;
- man überträgt die k Listen, die berechneten Risikozahlen und ihre Komplemente, sowie die Rechenalgorithmen der verbotenen Unter-Identifikanden zu allen Zugriffspunkten (1), wo diese Informationen gespeichert werden;

B - dann, im Moment einer Zugriffanforderung eines durch einen Identifikanden dargestellten Benutzers, die an einem gegebenen Zugriffspunkt stattfindet, an diesem Zugriffspunkt:
- man berechnet mit Hilfe der k Algorithmen die Unter-Identifikanden, welche dem Identifikanden des Benutzers entsprechen, der zugreifen möchte;
- man überprüft das Vorhandensein dieser Unter-Identifikanden in den entsprechenden, zuvor erstellten und in dem Speicher der verbotenen Unter-Identifikanden gehaltenen Listen;
- wenn der Unter-Identifikand in der Liste der verbotenen Unter-Identifikanden gleichen Rangs existiert, ordnet man ihm ein Risiko zu, das gleich dem dieser Liste zugeordneten Risiko ist;
- wenn der Unter-Identifikand in der Liste der verbotenen Unter-Identifikanden gleichen Rangs nicht existiert, ordnet man ihm ein Risiko zu, das gleich dem Komplement des dieser Liste zugeordneten Risikos ist;

- man berechnet das Gesamtrisiko des Zugriffs durch eine vorbestimmte Operation an den Einzelrisiken;

- wenn das Gesamtrisiko größer oder gleich dem allgemeinen Risiko ist, erbittet man bei einem Zentrum eine Ermächtigung, dem Anfordernden Zugriff zu gewähren; wenn das Gesamtrosiko kleiner als das allgemeine Risiko ist, gewährt man den Zugriff unmittelbar.

2. Verfahren nach Anspruch 1, dadurch gekennzeichnet, daß die Unter-Identifikanden von Zeichengruppen gebildet werden, die dem Identifikanden entnommen werden, welchem sie zugeordnet sind.

3. Vorrichtung zur Kontrolle eines Zugriffs eines Benutzers, der durch einen Code oder Identifikanden dargestellt ist, auf ein Datenverarbeitungssystem von einem Zugriffspunkt (1) aus, der aus einer Mehrzahl möglicher Zugriffspunkte ausgewählt ist, dadurch gekennzeichnet, daß es umfaßt:

A - in einem zentralisierten Teil des Systems:

- Erfassungsmittel zum Erfassen der Identifikanden, deren Zugriff auf das System verboten ist, wobei jeder Identikand von einer Gesamtheit von n Zeichen gebildet ist,

- Rechenmittel, die geeignet sind, mit Hilfe von k Algorithmen für jeden verbotenen Identifikanden k verbotene Unter-Identifikanden zu berechnen, die von einer gleichen Anzahl von Zeichen gebildet sind, welche kleiner ist als jene der Identifikanden;

- Klassifizierungsmittel, die geeignet sind, k Listen zu erstellen, welche die verbotenen Unter-Identifikanden gleichen Rangs zusammenfassen, welche jeweils mit den k Algorithmen erhalten wurden;

- Risikobestimmungsmittel, die geeignet sind, jeder Liste eine Risikozahl zuzuweisen, die als Funktion der theoretischen Auftrittshäufigkeit der Unter-Identifikanden in der Population der Identifikanden berechnet wird, und jeder Risikozahl ein Komplement zuzuordnen;

- Übertragungsmittel, die geeignet sind, das allgemeine Risiko für eine Zugriffsanforderung zu berechnen;

- Übertragungsmittel, die geeignet sind, die k Listen, die berechneten Risikozahlen und ihre Komplemente, sowie die Rechenalgorithmen der verbotenen Unter-Identifikanden zu allen Zugriffspunkten (1) zu übertragen, wo diese Informationen gespeichert werden;

B - an jedem Zugriffspunkt:

- Rechenmittel, die geeignet sind, mit Hilfe der k Algorithmen die Unter-Identifikanden zu berechnen, welche dem Identifikanden des Benutzers entsprechen, der zugreifen möchte;

- Recherchenmittel, die geeignet sind, das Vorhandensein dieser Unter-Identifikanden in den entsprechenden, zuvor erstellten und in dem Speicher der verbotenen Unter-Identifikanden gehaltenen Listen zu überprüfen;

- Zuweisungsmittel, um jedem Unter-Identifikanden eine Risikozahl zuzuweisen, die geeignet sind:

wenn der Unter-Identifikand in der Liste der verbotenen Unter-Identifikanden gleichen Rangs existiert, ihm ein Risiko zuzuordnen, das gleich dem dieser Liste zugeordneten Risiko ist;

wenn der Unter-Identifikand in der Liste der verbotenen Unter-Identifikanden gleichen Rangs nicht existiert, ihm ein Risiko zuzuordnen, das gleich dem Komplement des dieser Liste zugeordneten Risikos ist;

- Rechenmittel, die geeignet sind, das Gesamtrisiko des Zugriffs durch eine vorbestimmte Operation an den Einzelrisiken zu berechnen;

- Auswahlmittel, die geeignet sind, dann, wenn das Gesamtrisiko größer oder gleich dem allgemeinen Risiko ist, bei einem Zentrum eine Ermächtigung zu erbitten, dem Anfordernden Zugriff zu gewähren; oder dann, wenn das Gesamtrosiko kleiner als das allgemeine Risiko ist, den Zugriff unmittelbar zu gewähren.

4. Vorrichtung nach Anspruch 3, dadurch gekennzeichnet, daß die Erfassungsmittel zum Erfassen verbotener Identifikanden in einem Sicherheitszentrum (4) des Systems angeordnet sind.

5. Vorrichtung nach Anspruch 3 oder 4, dadurch gekennzeichnet, daß die Rechenmittel zum Berechnen der Unter-Identifikanden, die Klassifizierungsmittel, die Risikozahlerstellungsmittel, die Rechenmittel zum Berechnen des allgemeinen Risikos und die Übertragungsmittel in einem Verwaltungszentrum (3) des Systems angeordnet sind, das mit dem Sicherheitszentrum (4) und den Zugriffspunkten (1) in Verbindung

EP 0 501 888 B1

steht.

**Claims**

1. A method of controlling access by a user, represented by a code or identifier, to a data-processing system from an access point (1) selected from a plurality of possible access points, characterised in that it comprises the following steps:

   A - during a preliminary preparatory phase:
   - identifiers which are prohibited from having access to the system are detected, each identifier being formed by a set of $n$ symbols;
   - for each prohibited identifier there are calculated, by means of $k$ algorithms, $k$ prohibited sub-identifiers consisting of one and the same number of symbols less than that of the identifiers;
   - $k$ lists are prepared which combine the prohibited sub-identifiers of the same ranks respectively obtained with the $k$ algorithms;
   - a risk number calculated according to the theoretical frequency of occurrence of the sub-identifiers in the population of identifiers is allocated to each list and a complement is associated with each risk number;
   - the general risk for an access request is calculated;
   - the $k$ lists, the calculated risk numbers and their complements are transmitted, together with the prohibited sub-identifier calculation algorithms, to all the access points (1) where these data are stored;

   B - then, at the time of an access request by a user represented by an identifier made at a given access point, the following steps are carried out at this access point:
   - by means of the $k$ algorithms the sub-identifiers corresponding to the identifier of the user requesting access are calculated;
   - a check is made whether said sub-identifiers are present in the corresponding prepared stored lists of the prohibited sub-identifiers;
   - if the sub-identifier is present in the list of prohibited sub-identifiers of the same rank, it is allocated a risk equal to the risk allocated to said list;
   - if the sub-identifier is not present in the list of prohibited sub-identifiers of the same rank, it is allocated a risk equal to the complement of the risk allocated to said list;
   - the total risk of the access is calculated by a predeterinined operation on the individual risks;
   - if the total risk is greater than or equal to the general risk, a request is made to a centre for authorisation to give the requesting user access; if the total risk is less than the general risk, access is granted directly.

2. A method according to claim 1, characterised in that the sub-identifiers consist of groups of symbols extracted from the identifier with which they are associated.

3. An installation for controlling access by a user, represented by a code or identifier, to a data-processing system from an access point (1) selected from a plurality of possible access points, characterised in that it comprises:

   A - in a centralised part of the system:
   - means for detecting identifiers which are prohibited access to the system, each identifier being formed by a set of $n$ symbols,
   - calculating means which, by means of $k$ algorithms, are adapted to calculate, for each prohibited identifier, $k$ prohibited sub-identifiers consisting of one and the same number of symbols less than that of the identifiers;
   - sorting means adapted to prepare $k$ lists combining the prohibited sub-identifiers of the same ranks respectively obtained with the $k$ algorithms;
   - risk determining means adapted to allocate to each list a rish number calculated according to the theoretical frequency of occurrence of the sub-identifiers in the population of identifiers and associate a complement with each risk number;
   - transmission means adapted to calculate the general risk for an access request;
   - transmission means adapted to transmit the $k$ lists, the calculated risk numhers and their complements, and the prohibited sub-identifier calculation algorithms to all the access points (1) where these data are stored;

9

B - at each access point:
- calculating means adapted, by means of the $\underline{k}$ algorithms, to calculate the sub-identifiers corresponding to the identifier of the user requesting access;
- search means adapted to check whether said sub-identifiers are present in the corresponding prepared stored lists of the prohibited sub-identifiers;
- means for allocating a risk number to each sub-identifier adapted:
- if the sub-identifier is present in the list of prohibited sub-identifiers of the same rank, to allocate thereto a risk equal to the risk allocated to said list;
  if the sub-identifier is not present in the list of prohibited sub-identifiers of the same rank, to allocate thereto a risk equal to the complement of the risk allocated to said list;
- calculating means adapted to calculate the total access risk by a predetermined operation on the individual risks;
- selection means which, if the total risk is greater than or equal to the general risk, are adapted to ask a centre for authorisation to grant the requesting user access or, if the total risk is less than the general risk, directly grant access.

4. An installation according to claim 3, characterised in that the prohibited identifier detection means are situated in a security centre (4) of the system.

5. An installation according to claim 3 or 4, characterised in that the sub-identifier calculating means, the sorting means, risk number preparation means, general risk calculating means and transmission means are situated in a management centre (3) of the system which is in communication with the security centre (4) and the access points (1).

# FIG.1.

TERMINAL

TERMINAL

TERMINAL
POINT
D'ACCES

MOYENS
DE
COMMUNICATION

CENTRE DE GESTION

CENTRE DE SECURITE

# FIG.2.

RAM

ROM

IMPRIMANTE

CLAVIER

UC

MODEM

ECRAN

AUTRES MOYENS DE SAISIE

EP 0 501 888 B1

**CENTRE DE SECURITE**

Détection de E identifiants interdits d'accès

Envoi de la liste : I1, I2 ,....., IE

**CENTRE DE GESTION**

$J=1$

$J>E$ — Oui / Non

$I_J$    $I_J$    $I_J$

$A_1$    $A_2$    $A_K$

$C_{1J}$    $C_{2J}$ ——————— $C_{KJ}$

$J=J+1$

Calcul des nombre-risque et des compléments

$R_1$ $R_2$ ——————— $R_K$
$S_1$ $S_2$ ——————— $S_K$

| LISTE 1 | LISTE 2 | LISTE K | | |
|---|---|---|---|---|
| C11.........C1E | C21.........C2E | CK1........CKE | R1.........RK  S1.........SK | RG |

FIG.3.

FIG.4.